# EUROPEAN PATENT SPECIFICATION

(11) **EP 1 370 905 B1**
(45) Date of publication and mention of the grant of the patent: **05.01.2011**
(21) Application number: 02753598.8
(22) Date of filing: 01.03.2002
(51) Int. Cl.: G02F 1/167

(54) **ELECTROPHORETIC MEDIUM**
ELEKTROPHORETISCHES MEDIUM
MILIEU ELECTROPHORETIQUE

(30) Priority: 19.03.2001 US 277391 P
(43) Date of publication of application: 17.12.2003
(73) Proprietor: E Ink Corporation, Cambridge, MA 02138-1002 (US)
(72) Inventor: PAOLINI JR., Richard, J., Arlington, MA 02476 (US); MILLER, David, D., Wakefield, MA 01880 (US); COMISKEY, Barrett, Cambridge, MA 02139 (US)
(74) Representative: Cole, David John
(86) International application number: PCT/US2002/006393
(87) International publication number: WO 2002/075443

(56) References cited:
- EP-A- 0 980 017
- EP-A- 1 115 026
- WO-A-99/56171
- US-A- 6 067 185

## Description

This invention relates to an electrophoretic medium and to a process for the production of this medium. More specifically, this invention relates to a two-phase electrophoretic medium which comprises a discontinuous phase containing electrophoretically-mobile particles and a continuous phase essentially free from such particles.

Electrophoretic displays have been the subject of intense research and development for a number of years. Such displays can have attributes of good brightness and contrast, wide viewing angles, state bistability, and low power consumption when compared with liquid crystal displays. (The terms "bistable" and ''bistability'' are used herein in their conventional meaning in the art to refer to displays comprising display elements having first and second display states differing in at least one optical property, and such that after any given element has been driven, by means of an addressing pulse of finite duration, to assume either its first or second display state, after the addressing pulse has terminated, that state will persist for at least several times, for example at least four times, the minimum duration of the addressing pulse required to change the state of the display element.) Nevertheless, problems with the long-term image quality of these displays have prevented their widespread usage. For example, particles that make up electrophoretic displays tend to cluster and settle, resulting in inadequate service-life for these displays.

Numerous patents and applications assigned to or in the names of the Massachusetts Institute of Technology and E Ink Corporation have recently been published described encapsulated electrophoretic media. Such encapsulated media comprise numerous small capsules, each of which itself comprises an internal phase containing electrophoretically-mobile particles suspended in a liquid suspension medium, and a capsule wall surrounding the internal phase. Typically, the capsules are themselves held within a polymeric binder to form a coherent layer positioned between two electrodes. Encapsulated media of this type are described, for example, in U.S. Patents Nos. 5,930,026; 5,961,804; 6,017,584; 6,067,185; 6,118,426; 6,120,588; 6,120,839; 6,124,851; 6,130,773; 6,130,774; 6,172,798; 6,177,921; 6,232,950; 6,241,921; 6,249,271; 6,252,564; 6,262,706; 6,262,833; 6,300,932; 6,312,304; 6,312,971; 6,323,989; and 6,327,072; U.S. Patent Application Publication No. 2001-0045934; and International Applications Publication Nos. WO 97/04398; WO 98/03896; WO 98/19208; WO 98/41898; WO 98/41899; WO 99/10767; WO 99/10768; WO 99/10769; WO 99/47970; WO 99/53371; WO 99/53373; WO 99/56171; WO 99/59101; WO 99/67678; WO 00/03349; WO 00/03291; WO 00/05704; WO 00/20921; WO 00/20922; WO 00/20923; WO 00/26761; WO 00/36465; WO 00/36560; WO 00/36666; WO 00/38000; WO 00/38001; WO 00/59625; WO 00/60410; WO 00/67110; WO 00/67327 WO 01/02899; WO 01/07691; WO 01/08241; WO 01/08242; WO 01/17029; WO 01/17040; WO 01/17041; WO 01/80287 and WO 02/07216. The entire disclosures of all these patents and published applications, all of which are in the name of, or assigned to, the Massachusetts Institute of Technology (MIT) or E Ink Corporation, are herein incorporated by reference.

Many of the aforementioned patents and applications recognize that the walls surrounding the discrete microcapsules in an encapsulated electrophoretic medium could be replaced by a continuous phase, thus producing a so-called "polymer-dispersed electrophoretic display" in which the electrophoretic medium comprises a plurality of discrete droplets of an electrophoretic fluid and a continuous phase of a polymeric material, and that the discrete droplets of electrophoretic fluid within such a polymer-dispersed electrophoretic display may be regarded as capsules or microcapsules even though no discrete capsule membrane is associated with each individual droplet; see for example, WO 01102899, at page 10, lines 6-19. However, none of the aforementioned patents and applications describe an experimental preparation of such a polymer-dispersed electrophoretic display.

It has now been found that two-phase electrophoretic media with advantageous properties can be prepared using a simple, inexpensive process, and this invention relates to such media and to processes for their preparation.

Accordingly, this invention provides a two-phase polymer-dispersed electrophoretic medium comprising a continuous phase and a discontinuous phase, the discontinuous phase comprising a plurality of droplets, each of which comprises a suspending fluid and at least one particle disposed within the suspending fluid and capable of moving through the fluid upon application of an electric field to the electrophoretic medium, and the continuous phase surrounding and encapsulating the discontinuous phase, the discontinuous phase comprising at least about 40 per cent by volume of the electrophoretic medium.

This invention also provides a process for producing a two-phase polymer-dispersed electrophoretic medium, this process comprising:
providing a liquid medium comprising a film-forming material;
dispersing in the liquid medium a plurality of droplets, each of which comprises a suspending fluid and at least one particle disposed within the suspending fluid and capable of moving through the fluid upon application of an electric field thereto; and
subjecting the liquid medium to conditions effective to cause the film-forming therein to form a film, and thereby producing a two-phase electrophoretic medium in which the film-forming material forms a continuous phase surrounding and encapsulating the droplets, which form the discontinuous phase of the electrophoretic medium, and in which the discontinuous phase comprises at least about 40 per cent by volume of the electrophoretic medium.

Preferred embodiments of the invention will now be described, though by way of illustration only, with reference to the accompanying drawings, in which:
Figure 1 is a schematic cross-section illustrating an intermediate stage in a process of the present invention after coating a mixture of a liquid medium and electrophoretic droplets on to a substrate but before drying of the mixture;
Figure 2 is a photomicrograph showing a top plan view of the intermediate stage shown in Figure 1;
Figure 3 is a schematic cross-section similar to that Figure 1, but showing the final medium of the present invention after drying; and
Figure 4 is a photomicrograph similar to that Figure 2 but showing a top plan view of the final medium shown in Figure 3.

As already mentioned, the present invention provides a two-phase polymer-dispersed electrophoretic medium comprising a continuous phase and a discontinuous phase. The discontinuous phase comprises a plurality of droplets, each droplet itself comprising a suspending fluid and at least one particle disposed within the suspending fluid and capable of moving through the fluid upon application of an electric field to the electrophoretic medium. This discontinuous phase comprises at least about 40 per cent by volume of the electrophoretic medium. The continuous phase surrounds and encapsulates the discontinuous phase, thus providing a cohesive electrophoretic medium.

In the present polymer-dispersed electrophoretic medium, the discontinuous phase (droplets) may comprise from about 40 to about 95 percent by volume of the medium but preferably comprises about 50 to about 80 percent by volume. The optimum proportion of droplets will of course vary with the specific materials employed, but will typically be in the range of about 60 to about 70 percent by volume. If the proportion of droplets is too high, the electrophoretic medium is mechanically weak and easily damaged, and droplets may leak from the medium upon rough handling. On the other hand, it is undesirable to use a proportion of continuous phase substantially larger than that required to provide mechanical strength to the medium. As is well-known to those knowledgeable concerning electrophoretic displays, such displays normally comprise a thin layer of the electrophoretic medium between two electrodes, so that at any given operating voltage between the electrodes, the field applied to the electrophoretic medium is inversely proportional to its thickness. If excess continuous phase is used in the present medium, the thickness of the medium needed to provide a given amount of droplets will be unnecessarily increased, so that either the applied field will be reduced (and the switching time of the display thereby increased) or the operating voltage must be increased, either of which is undesirable.

The droplets used in the present medium may be of any of the types described in the aforementioned patents and applications, as discussed in more detail below. Specifically, the droplets may comprise a single type of particle disposed in a colored suspending fluid, or two or more types of particles, differing in charge polarity and/or electrophoretic mobility; in the latter case, the suspending fluid may be colored or uncolored. However, the use of droplets containing two or more types of particles and an uncolored suspending fluid is generally preferred, since the present invention is well adapted to form electrophoretic media in layers less than 50 µm in thickness (as discussed in more detail below) with droplets less than 20 µm in thickness, and in such thin layers and droplets, there may be difficulty in providing colored suspending fluids having sufficient optical density to completely hide the electrophoretic particles when the particles are drawn away from the viewing surface of the display so that the color of the suspending medium is intended to be visible. As discussed in more detail below, the suspension medium is normally an organic liquid, typically a mixture of a hydrocarbon and a halocarbon, so water-dispersible materials are preferred for the continuous phase of the present electrophoretic medium.

As already indicated, the electrophoretic medium of the present invention is prepared by dispersing the droplets in a liquid medium containing a film-forming material, and then subjecting the liquid medium to conditions effective to cause the film-forming material to form a film and thus produce the two-phase electrophoretic medium in which the film-forming material forms the continuous phase and the droplets for the discontinuous phase. The initial dispersion or emulsification of the droplets in the liquid medium may be effected by any of a variety of conventional techniques, for example rapid stirring of a mixture of the liquid medium and the material which will form the droplets, or sonication of such a mixture. Devices suitable for forming the droplets also include, but are not limited to, blade mixers, rotor-stator mixers and colloid mills, devices in which a liquid stream is pumped at high pressures through an orifice or interation chamber (such as the Microfluidizer sold by Microfluidics), sonicators, Gaulin mills, homogenizers, blenders, etc. The dispersion or emulsification may also be effected by shearing, using a colloid mill or similar apparatus. It should, however, be noted that the presence of the electrophoretic particles within the droplets tends to make a dispersion or emulsion of such droplets less stable than a similar emulsion or dispersion of the same materials in which the droplets do not contains solid particles, and hence in the present process it is preferred to use a liquid medium which can solidify rapidly.

Good results have been achieved by using a gelatin solution as the liquid medium and spreading a thin layer of at least about 50 µm, but preferably from about 50 µm to about 200 µm, on to a cool substrate so that the gelatin solidifies very rapidly. Typically the layer is spread to a thickness of about 100 µm. As already indicated, the film-forming material used in the present invention is preferably gelatin, such as lime-processed gelatin, acid-processed pig gelatin or acid-processed ossein gelatin, or a modified gelatin such as acetylated gelatin, phthalated gelatin, oxidized gelatin, etc. Other film formers include water-soluble polymers and co-polymers including, but not limited to, poly(vinyl alcohol), partially hydrolyzed poly(vinyl acetate/vinyl alcohol), hydroxyethyl cellulose, poly(vinylpyrrolidone), and polyacrylamide. Copolymers of these with hydrophobic monomers, such as t-butyl acrylamide, or isopropyl acrylamide can also be used. Polymeric film formers that are also capable of gelation upon application of high or low temperature are particularly useful. Such materials include the various gelatins described above, cellulosic materials, and homopolymers or copolymers containing isopropyl acrylamide.

Radiation-curable (typically ultra-violet light-curable) materials may also be used as film formers, which could be an aqueous dispersion of a curable polymer, a polymer melt, a monomer, an oligomer or various mixtures of these forms. The curable material could be a separate continuous phase analogous to the gelatin continuous phase already described. However, the curable material could also be dissolved in the "discontinuous" phase so that upon exposure to the curing radiation, the curable material both cures and separates from the phase in which it is originally dissolved to form a separate continuous phase. Such a system would have the advantage that, prior to the radiation exposure, the liquid medium would constitute only a single phase (except of course for the electrophoretic particles dispersed therein) and coating such a single phase system is often simpler and easier to control than coating of a two-phase system.

The film-forming material may alternatively be a two-component system; for example, one component could be a polymerizable material and the other a polymerization initiator (the use of liquid media containing glycol-type solvents might be useful in such systems), or the two components could be reagents known to be stable in isolation but to form a polymer on contact with one another, for example a polyurethane pre-polymer and water or another active-hydrogen containing material. A two-component film-forming material may be useful, for instance, where it is desired to spray the liquid medium on to a substrate, rather than coat the substrate. As is well known in the coating industry, a mixture containing a two-component film-forming material can conveniently be sprayed by pumping a liquid medium containing one component through a nozzle provided with an injection port through which the other component is added to the liquid medium, so that the two-component mixture is formed within the nozzle and immediately sprayed.

Alternatively, two-component film-forming materials are available which either have a substantial "lag" time between the time when the components are mixed and the polymerization or other film-forming process occurs, or which require some external stimulus, such as heat or contact with atmospheric moisture, to initiate the film-forming process. Any of these systems permit mixing of all the components of the eventual electrophoretic medium before the liquid medium is deposited upon the substrate.

A two-component film-forming material may also be useful for coating irregularly-shaped substrates and/or coating only certain parts of substrates. In both cases, the first of the two components may be placed on the substrate, or on those parts of the substrate which it is desired to coat with the final electrophoretic medium (for example, an irregularly-shaped substrate could be coated by dip coating), and then the liquid phase containing the second component of the film-forming material could be applied to the substrate so that the electrophoretic medium is formed only on those parts of the substrate previously coated with the first component.

In a further variant of a two-component film-forming material, one of the two components is dispersed in the continuous phase of the liquid medium, while the second component is dispersed in the droplets, so that film formation occurs first at the phase boundary between the droplets and the continuous phase, thus producing weak walls around the droplets and thus reducing any tendency for the droplets to rupture or otherwise become damaged during later handling or shrinkage of the electrophoretic medium.

Both radiation-curable and two-component film-forming materials could also be used in other techniques for patterning the final electrophoretic medium on to a substrate. A continuous layer of a radiation-curable liquid medium could be applied to the substrate and thereafter radiation could be imagewise applied to the continuous layer so that the cured electrophoretic medium is only formed where the continuous layer is exposed to the radiation; the radiation-curable liquid medium would thus act like a positive photoresist. Similarly, a continuous layer of a liquid medium containing only one component of a two-component film-forming material could be applied to a substrate and the second component applied in an imagewise manner so that the cured electrophoretic medium is only formed where the second component is applied. In either case, the uncured liquid medium could then be washed off leaving a patterned electrophoretic medium on the substrate.

Such patterning techniques may be used to form color electrophoretic displays. It has previously been suggested that full color electrophoretic displays could be formed in a manner analogous to the phosphors on color cathode ray tubes by patterning three different types of microencapsulated electrophoretic media capable of displaying different color in separate but closely-spaced areas of the display. Such a structure could be produced by repeating the procedure described in the preceding paragraph three times with different discontinuous phases in the electrophoretic media, the uncured liquid medium being removed after each radiation exposure or application of the second component.

(The radiation-curing technique described above is analogous to a conventional positive photoresist. A process of the present invention analogous to a negative photoresist is also possible. Such a process would form an electrophoretic medium having a continuous phase which would depolymerize or otherwise degrade upon exposure to radiation. The electrophoretic medium would be formed by any of the techniques described above, imagewise exposed to radiation to degrade the areas where no electrophoretic medium was desired in the final product, and washed with an appropriate solvent (which need not be aqueous) to remove the degraded electrophoretic medium. This process would, however, be complicated to use than the "positive photoresist" variant described above.)

The radiation-curing and two-component film-forming material techniques described above could be used in combination with other techniques to form the electrophoretic media of the present invention. For example, radiation-curing or two-component film-forming material could be used to produce an initial stable film from a liquid phase and thereafter this stable film could be dried or otherwise treated to cause it to shrink and form the final electrophoretic medium. Alternatively, either radiation exposure, or deposition of the second component of a two-component film-forming material on to the surface, of a film of liquid medium on a substrate may be useful in forming a "skin" on the exposed surface of the layer of liquid medium; such a skin may, in some systems, be useful in reducing any tendency for droplets of the discontinuous phase to rupture at this exposed surface.

The present invention also allows for formation of patterned electrophoretic medium by a technique analogous to lithographic printing. A substrate may be patterned in a manner which allows the liquid medium used in the present process to deposit upon some areas of the substrate but not others. For example, a hydrophilic substrate could be printed with a conventional water-repellant lithographic ink, thus rendering the ink-covered areas hydrophobic, and the printed substrate treated with a liquid medium, similar to those used in the Examples above, having a hydrophilic gelatin-based continuous phase, so that the liquid medium only deposits on the unprinted areas of the substrate. After drying and formation of the electrophoretic medium, the ink could if desired be removed using a non-aqueous solvent. Alternatively and perhaps more conveniently, the ink could be replaced by a similar liquid comprising only the hydrophobic vehicle of a conventional lithographic ink, without the pigment, thus avoiding any need to remove the colored ink after formation of the final electrophoretic medium.

The present invention provides considerable flexibility in the physical form of the final electrophoretic medium. For example, by using either a hot melt polymer (such as ethylene/vinyl acetate) or a reactive injection molding urethane polymer, the present process can make use of conventional injection molding techniques to form sheets of electrophoretic medium of any desired shape with a mold.

It must be emphasized that the present invention is not restricted to any particular technique for formation of the droplets in the liquid medium, or to any particular type of physico-chemical change for film formation. For example, in addition to the techniques previously described, the liquid medium could be formed by coextrusion of its two phases through a nozzle, as known in the art for forming other types of emulsions. Alternatively, the droplets of the discontinuous phase could be formed by emulsification in one medium, and the droplets separated from the bulk of the phase of this medium and redispersed in a different medium to form the liquid phase used in the present process. The liquid medium may also be formed by high internal phase emulsion techniques, as described for example in Cameron, N.R., and Sherrington, D.C., "High Internal Phase Emulsions (HIPEs) - Structure, Properties and Use in Polymer Preparation", Adv. Polym. Sci., 126, 163 (1996); and Bampfield, H.A., and Cooper, J., "Emulsion Explosives", in "Encyclopedia of Emulsion Technology: Volume 3 - Basic Theory Measurement Applications, Becher, P. (ed.), Marcel Dekker, New York (1988). The limited coalescence process may be used to create essentially monodisperse droplets with adjustable diameters from about 1 micron to over 100 micron. This process is described in U.S. Pat. Nos. 4,994,312; 5,055,371; 2,932,629; 2,934,530; 4,833,060; 4835,084; 4,965,131; 5,354,799; 5,580,692; 5,700,608, 6,156,473; and 6,113,810. The droplets may also be formed by shearing the liquid used to form the droplets, or by couette flow (passage of a liquid through a narrow gap between two relatively moving surfaces, for example between two co-axial cylinders one of which is fixed and the other moving).

In the present process, film formation may take place by a sol/gel transformation, using for example a water glass based continuous phase.

As will be apparent from the foregoing discussion, a wide variety of materials may be used in the present process. Aqueous external phases in this process may include dispersion polymers , such as latices, urethane dispersions, silicones and epoxies, and solution polymers such as poly(vinyl alcohol) and polyvinylpyrrolidone. Film-forming materials which may be useful include lower consolute temperature polymers such as N-isopropylacrylamide, and highly shear thinning, high low-shear viscosity polymers such as gums, xanthan, carageenan, associative thickeners, and cellulosic gelling agents, which may also form the continuous phase matrix. Silicone polymers may be used in the continuous phase where stability of the medium is of major concern. Also, the continuous phase may comprise a pressure-sensitive adhesive to improve adhesion of the electrophoretic medium to the substrate. A wide variety of solvents, for example fluorosilicones, may be used as the liquid vehicles in the discontinuous phase.

The present invention may be varied by first forming a layer comprising the continuous phase of an electrophoretic medium and then injected droplets of electrophoretic fluid into this layer, for example by ink jet printing or similar techniques. Where the continuous phase is of a type which is to be shrunk to produce the final electrophoretic medium, it is generally desirable to inject the droplets of electrophoretic fluid before shrinking the medium to provide, in the final medium, non-spherical droplets, for the reasons already discussed.

In order to assist in stabilizing the droplets, it is advantageous to add a surfactant to the dispersion or emulsion, a preferred surfactant for this purpose being sodium dodecylsulfate, typically added in an amount of about 0.1 to about 1 percent by weight of the liquid medium. Other surfactants which may be useful include Alkanol XC (an alkyl sulfonate surfactant available from E. I. du Pont de Nemours and Company, Wilmington, Delaware, United States of America), sodium dodecylbenzenesulfonate, bis(2-ethylhexyl)sulfosuccinate (available as Aerosol OT from Cytec Industries, Inc., West Paterson, NJ 07424, United States of America). Non-ionic surfactants and zwitterionic surfactants, for example betaines and lecithin-type molecules, may also be useful. Since dispersions of electrophoretic particles used to form the droplet in the present medium often contain substantial amounts of surfactants, some of which will inevitably diffuse to the droplet/continuous phase boundary, it may be necessary to adjust the amount of surfactant added the dispersion or emulsion to allow for the effects of the surfactant already present in the droplets.

Although the discontinuous phase of the present medium is referred to herein as "droplets", such references are not to be construed as limiting the discontinuous phase to spherical or near-spherical droplets. Indeed, it is preferred that the droplets not be spherical. As discussed in the aforementioned U.S. Patent No. 6,067,185, there are significant advantages to using non-spherical droplets in electrophoretic media, and this patent discusses various ways in which spherical microcapsules may deliberately be distorted into non-spherical shapes during incorporation of such microcapsules into a binder. The present invention has the advantage that, by careful choice of materials and processing conditions, the electrophoretic medium can be formed with its discontinuous phase in the form of non-spherical droplets.

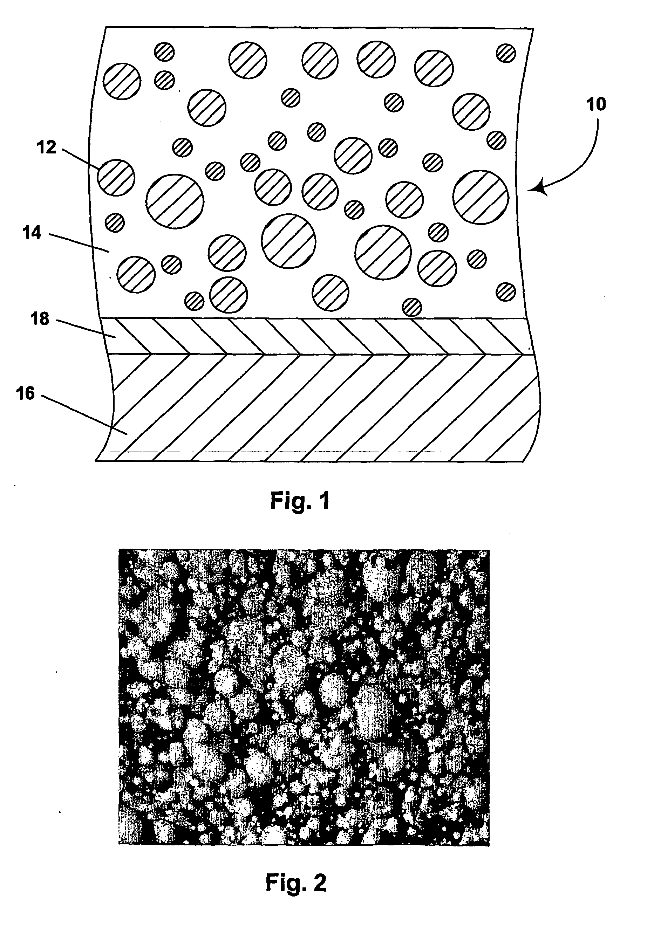

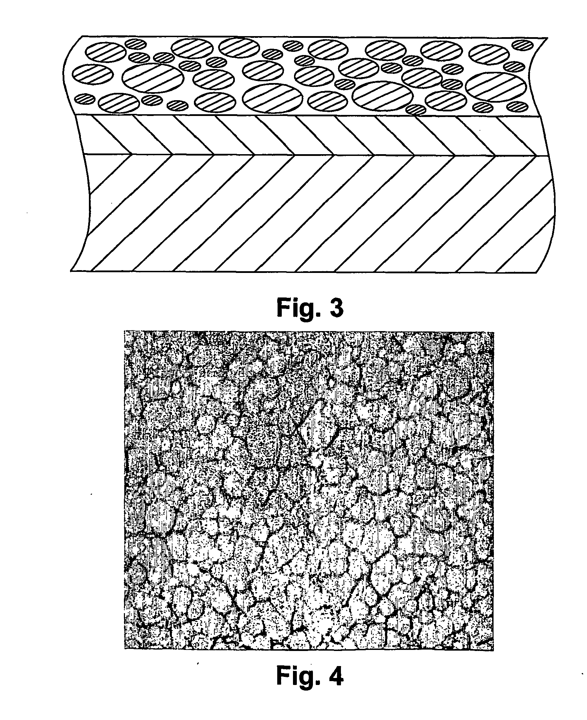

Media of the present invention containing non-spherical droplets can readily be prepared by using a film-forming material which produces a film which can be shrunk substantially after its formation. The preferred discontinuous phase for this purpose is gelatin, although other proteinaceous materials, and possibly cross-linkable polymers may alternatively be employed. A mixture of the liquid material (which will eventually form the continuous phase) and the droplets is formed and coated on to a substrate to form a structure as illustrated in Figures 1 and 2. Figure 1 shows a layer 10 comprising droplets 12 dispersed in a liquid medium 14 which is in the process of forming a film, this layer 10 having been coated on a substrate 16 (preferably a flexible polymeric film, such as a polyester film) previously provided with a layer 18 of a transparent electrically conductive material, such as indium-tin oxide. The liquid material forms a relatively thick layer 10 containing essentially spherical droplets 12; as shown in Figure 1. After the layer 10 has formed a solid continuous phase, the layer is then allowed to dry, preferably at about room temperature (although the layer may be heated if desired) for a period sufficient to dehydrate the gelatin, thus causing substantial reduction in the thickness of the layer and producing the type of structure illustrated in Figures 3 and 4, the dried and shrunken layer being designated 10' in Figure 3. The "vertical" shrinkage of the layer (i.e., the shrinkage perpendicular to the surface of the substrate 16) in effect compresses the original spherical droplets into oblate ellipsoids whose thickness perpendicular to the surface is substantially smaller than their lateral dimensions parallel to the surface. In practice, as illustrated in Figure 4, the droplets are normally sufficiently closely packed that the lateral edges of adjacent droplets contact each other, so that the final forms of the droplets more closely resemble irregular prisms than oblate ellipsoids. Also as shown in Figure 3, more than one layer of droplets may be present in the final medium. When the medium is of the type shown in Figures 3 and 4 in which the droplets are polydisperse (i.e., a wide range of droplet sizes are present), the presence of such multiple layers is advantageous in that it reduces the chance that small areas of the substrate will not be covered by any droplet; hence, the multiple layers help to ensure that the electrophoretic medium is completely opaque and that no part of the substrate is visible in a display formed from the medium. However, in a medium using essentially monodisperse droplets (i.e., droplets all of substantially the same size), it will generally be advisable to coat the medium in a layer which, after shrinkage, will produce a close-packed monolayer of droplets, cf. copending Application Serial No. 09/413,444, filed October 6, 1999, and the corresponding International Application No. PCT/US99/23313, Publication No. WO 00/20922. Because they lack the relatively rigid microcapsule walls found in microencapsulated electrophoretic media, the droplets used in the present invention may tend to pack more tightly into a close-packed monolayer than do microcapsules.

Contrary to what might be expected, experimentally it has been found that, at least in the preferred embodiments of the invention described in the Examples below, the droplets do not coalesce during the drying of the medium. However, we do not exclude the possibility that, in certain embodiments of the invention some rupturing of the walls between adjacent capsules might occur, thus providing a partial connection between droplets.

The degree of deformation of the droplets which occurs during the drying step, and hence the final forms of the droplets may be varied by controlling the proportion of water in the gelatin solution and the ratio of this solution to the droplets. For example, experiments were conducted using gelatin solutions of from 2 to 15 percent by weight, and using 200 grams of each gelatin solution and 50 grams of the "internal" non-aqueous phase which forms the droplets. To produce a final layer of electrophoretic medium 30 µm in thickness, it was necessary to coat a layer of the 2 per cent gelatin solution/internal phase mixture 139 µm in thickness; upon drying, this layer produced an electrophoretic medium 30 µm in thickness containing 92.6 percent by volume of droplets. On the other hand, to produce the same final thickness of electrophoretic medium, the 15 percent gelatin solution/internal phase mixture was coated at a thickness of 93 µm, and upon drying produced an electrophoretic medium containing 62.5 percent by volume of droplets. The medium produced from the 2 percent gelatin solution was weaker than is desirable to withstand robust handling; media produced from gelatin solutions containing from 5 to 15 percent by weight of gelatin had satisfactory mechanical properties.

The degree of deformation of the droplets in the final electrophoretic medium is also affected by the initial size of the droplets, and the relationship between this initial size and the thickness of the final layer of electrophoretic medium. Experiments indicate that the larger the average initial size of the droplets and/or the larger the ratio of this average initial size to the thickness of the final layer, the greater is the deformation of the droplets from a spherical shape in the final layer. In general, it is preferred that the average initial size of the droplets be from about 25 percent to about 400 percent of the thickness of the final layer. For example, in the experiments previously described, in which the thickness of the final layer was 30 µm, good results were obtained with an initial average droplet size of 10 to 100 µm.

Gelatin forms a film by a sol/gel transformation, but the present invention is not restricted to film-forming materials which form their films by such sol/gel transformation. For example, the formation the film may be accomplished by the polymerization of a monomer or oligomer, by the cross-linking of a polymer or oligomer, or by any other known film-forming process. Similarly, in the preferred variant of the invention in which the film is first formed and then caused to shrink in thickness, this shrinkage need not accomplished by the same type of dehydration mechanism by which a gelatin film shrinks, but may be accomplished by removal of a solvent, aqueous or non-aqueous, from the film, cross-linking of a polymeric film or any other conventional procedure.

From the foregoing, it will be seen that the present invention can be used to form the electrophoretic medium in the form of layers less than 50 µm in thickness. Indeed, the present invention can be used to prepare electrophoretic media in layers as thin as 20 µm, and possibly even thinner. Such thin layers have the advantage that they reduce the operating voltage and/or switching time of an electrophoretic display. Obviously, for any layer of a specific electrophoretic medium, the operating voltage required is proportional to the thickness of the medium. Also, at any given field strength the switching time of the medium is directly proportional to the distance which the electrophoretic particles must move to effect switching, and this distance is substantially equal to the thickness of a droplet perpendicular to the substrate. Accordingly, at a given operating voltage, the switching time of a layer of electrophoretic medium is proportional to the square of the thickness of the layer. Accordingly, the very thin layers of electrophoretic medium which can be achieved using the present invention allow for lowered operating voltages and/or switching times.

The process of the present invention also offers the advantage of reduced processing time as compared with processes for the production of microencapsulated electrophoretic media. The preferred emulsification/coating/drying procedure of the present invention described above using gelatin can be completed in about 1 to 2 hours; in contrast, the microencapsulation process described in Example 1 of the aforementioned Publication No. WO-99/10767 involves a processing time of at least two working days, with at least one overnight step.

The following Examples are now given, though by way of illustration only, to show details of particularly preferred reagents, conditions and techniques used in the present electrophoretic medium and process for its preparation.

### Example 1

An internal dual-particle phase (i.e., a phase which will eventually form droplets) was prepared containing 30 per cent by weight of polymer-coated white particles (titania) and 5 per cent by weight polymer-coated black particles (carbon black) in a suspension medium comprising a mixture of a hydrocarbon (Isopar-G, available commercially from Exxon Corporation, Houston, Texas, United States of America; "Isopar" is a Registered Trade Mark) and a halogenated hydrocarbon oil (Halogenated hydrocarbon oil 0.8, available commercially from Halogenated Hydrocarbon Products Corporation, River Edge, New Jersey, United States of America) and containing a dispersant (Solsperse 17000, available commercially from Avecia Ltd., Blackley, Manchester, United Kingdom; "Solsperse" is a Registered Trade Mark). Separately, a 15 per cent w/w solution of pigskin gelatin (300 Bloom strength gelatin from Dynagel Inc., Calumet City, Illinois 60409, United States of America) was prepared. The gelatin solution (200 g) was placed in a reactor equipped with a stirrer, SDS (0.3 g) was added, and the resultant mixture was stirred gently (at 100 rpm) and brought to 45°C. The internal phase (66.3 g) previously warmed to 45°C was added over a period of about 10 seconds through a tube opening below the surface of the gelatin solution under intense stirring (250 rpm), and this stirring was continued for 30 minutes.

A 10 ml aliquot of the resultant emulsion was transferred by means of a pipette to an ITO-coated polyester film and spread over the film by a draw down bar provided with a 2.5 mil (63 µm) gap. The thin layer thus produced solidified almost immediately, and the coated polyester film was then allowed to dry in air at ambient temperature for 15 minutes. The thickness of the final layer of electrophoretic medium thus produced was approximately 20 µm, and microscopy indicated that the maximum droplet size in the medium was about 10 µm.

In order to test the switching properties of the medium, a conductive adhesive tape, comprising a pressure-sensitive adhesive loaded with carbon black, was applied to the exposed surface of the medium, and then an ITO-coated polyester film was applied to the adhesive tape. A 15 V square wave form (500 msec at 15 V followed by 500 msec at 0 V) was applied to the ITO electrodes. The electrophoretic medium switched in both directions in less than 100 msec, and displayed a white state reflectance of 22.4 per cent and a dark state reflectance of 3.0 per cent.

### Example 2

Example 1 was repeated except that the internal phase contained 17 per cent by weight white particles and 1.8 per cent by weight black particles, and that only 59.5 g of internal phase was added to 200 g of gelatin solution in order to keep the volume ratio of the two phases the same as in Example 1. Also, a 5 mil (127 µm) gap was used with the draw down bar to produce a dried electrophoretic medium approximately 41 µm thick and having a maximum droplet size of about 35 µm.

In order to test the switching properties of the medium, the medium was vacuum laminated at 60°C to a ITO-coated polyester using NeoRez R-9320 urethane binder (available commercially from Zeneca Resins, Wilmington, Delaware, United States of America; NeoRez is a Registered Trade Mark) as the lamination adhesive; the lamination adhesive layer in the final structure was 79 µm thick. A 30 V square wave form (500 msec at 30 V followed by 500 msec at 0 V) was applied to the electrodes. The electrophoretic medium switched in both directions in less than 70 msec, and displayed a white state reflectance of 27.3 per cent and a dark state reflectance of 6.6 per cent.

Apart from the use of a two-phase structure rather than capsules contained in a binder, electrophoretic displays of the present invention resemble prior art encapsulated electrophoretic displays, and hence, as already noted, the present displays can make use of any known materials and processes for the production of such displays as described in the aforementioned E Ink Corporation and MIT patent applications.

It will readily be apparent to those skilled in the relevant art that numerous changes and modifications could be made to preferred embodiments of the invention discussed above without departing from the scope of the invention. For example, the gelatin continuous phase described in the Examples above could be replaced by an aqueous dispersion of a polymer, or a solution of a water-soluble polymer, in both cases with the addition of an aqueous gelling agent or thickener. Alternatively, the droplets could be replaced by microcapsules; such microcapsules would not need mechanically strong walls (so that, for example, the cross-linking normally used to strengthen the walls of the microcapsules could be omitted), since the continuous phase itself provides encapsulation and isolation of the microcapsules.

## Claims

1. A two-phase polymer-dispersed electrophoretic medium (10) comprising a continuous phase (14) and a discontinuous phase (12), the discontinuous phase (12) comprising a plurality of droplets, each of which comprises a suspending fluid and at least one particle disposed within the suspending fluid and capable of moving through the fluid upon application of an electric field to the electrophoretic medium (10), the continuous phase (14) surrounding and encapsulating the discontinuous phase (12), the medium being **characterized in that** the discontinuous phase (12) comprises at least 40 per cent by volume of the polymer-dispersed electrophoretic medium (10).

2. A two-Phase polymer-dispersed electrophoretic medium (10) according to claim 1 **characterized in that** the discontinuous phase (12) comprises 40 to 95 percent by volume.

3. A two-phase polymer-dispersed electrophoretic medium (10) according to claim 2 **characterized in that** the discontinuous phase (12) comprises 50 to 80 percent by volume.

4. A two-phase polymer-dispersed electrophoretic medium (10) according to claim 3 **characterized in that** the discontinuous phase (12) comprises 60 to 70 percent by volume.

5. A two-phase polymer-dispersed electrophoretic medium (10) according to any one of the preceding claims **characterized in that** the droplets comprise a single type of particle disposed in a colored suspending fluid.

6. A two-phase polymer-dispersed electrophoretic medium (10) according to any one of claims 1 to 4 **characterized in that** the droplets comprise at least two types of particles differing in at least one of charge polarity and electrophoretic mobility, and the suspending fluid is colored.

7. A two-phase polymer-dispersed electrophoretic medium (10) according to any one of claims 1 to 4 **characterized in that** the droplets comprise at least two types of particles differing in at least one of charge polarity and electrophoretic mobility, and the suspending fluid is uncolored.

8. A two-phase polymer-dispersed electrophoretic medium (10) according to claim 7 **characterized in that** the suspending fluid is selected from organic solvents, halogenated solvents, halogenated polymers, silicone oils, linear hydrocarbons, branched hydrocarbons, and mixtures thereof.

9. A two-phase polymer-dispersed electrophoretic medium (10) according to any one of claims 6 to 8 **characterized in that** the droplets contain two types of particles comprising titania and carbon black respectively.

10. A two-phase polymer-dispersed electrophoretic medium (10) according to any one of the preceding claims **characterized in that** the continuous phase (14) comprises gelatin.

11. A two-phase polymer-dispersed electrophoretic medium (10) according to claim 10 **characterized in that** the gelatin comprises 5 percent to 15 percent by weight of the electrophoretic medium.

12. A process for producing a two-phase polymer-dispersed electrophoretic medium (10), this process comprising:
providing a liquid medium comprising a film-forming material;
dispersing in the liquid medium a plurality of droplets, each of which comprises a suspending fluid and at least one particle disposed within the suspending fluid and capable of moving through the fluid upon application of an electric field thereby forming a droplet-containing liquid medium; and
subjecting the droplet-containing liquid medium to conditions effective to cause the film-forming material therein to form a film, and thereby producing a two-phase electrophoretic medium (10) in which the film-forming material forms a continuous phase (14) surrounding and encapsulating the droplets, which form the discontinuous phase (12) of the electrophoretic medium (10), the process being **characterized in that** the discontinuous phase (12) comprises at least 40 per cent by volume of the polymer-dispersed electrophoretic medium (10).

13. A process according to claim 12 or 13 **characterized in that** the dispersion of the plurality of droplets in the liquid medium is effected by any one or more of variable speed mixing, sonication, shearing and colloid milling.

14. A process according to claim 12 **characterized in that** prior to being exposed to the conditions to cause film formation, the droplet-containing liquid medium is spread as a layer having a thickness of at least 50 µm onto a substrate.

15. A process according to claim 14 **characterized in that** prior to being exposed to the conditions to cause the film formation, the droplet-containing liquid medium is spread as a layer having a thickness of 50 µm to 200 µm onto a substrate.

16. A process according to claim 15 **characterized in that** prior to being exposed to the conditions to cause the film formation, the droplet-containing liquid medium is spread as a layer having a thickness of 100 µm onto a substrate.

17. A process according to any one of claims 12 to 16 **characterized in that** the conditions effective to cause the film-forming material therein to form a film comprise any one or more of radiation-curing, heating, cooling, drying, polymerization, cross-linking, sol-gel formation, and pressure-curing.

18. A process according to any one of claims 12 to 17 **characterized in that** the droplets comprises an average initial size of 25 percent to 400 percent of the thickness of the final film.

## Patentansprüche

1. Zweiphasiges, in einem Polymer dispergiertes elektrophoretisches Medium (10), das eine kontinuierliche Phase (14) und eine diskontinuierliche Phase (12) umfasst, wobei die diskontinuierliche Phase (12) mehrere Tröpfchen aufweist, von denen jedes eine Suspensionsflüssigkeit und mindestens ein Teilchen aufweist, das in der Suspensionsflüssigkeit angeordnet und imstande ist, sich beim Anlegen eines elektrischen Felds an das elektrophoretische Medium (10) durch die Flüssigkeit zu bewegen, wobei die kontinuierliche Phase (14) die diskontinuierliche Phase (12) umgibt und einkapselt, wobei das Medium **dadurch gekennzeichnet ist, dass** die diskontinuierliche Phase (12) mindestens 40 Volumenprozent des zweiphasigen, in einem Polymer dispergierten elektrophoretischen Mediums (10) aufweist.

2. Zweiphasiges, in einem Polymer dispergiertes elektrophoretisches Medium (10) nach Anspruch 1, **dadurch gekennzeichnet, dass** die diskontinuierliche Phase (12) 40 bis 95 Volumenprozent aufweist.

3. Zweiphasiges, in einem Polymer dispergiertes elektrophoretisches Medium (10) nach Anspruch 2, **dadurch gekennzeichnet, dass** die diskontinuierliche Phase (12) 50 bis 80 Volumenprozent aufweist.

4. Zweiphasiges, in einem Polymer dispergiertes elektrophoretisches Medium (10) nach Anspruch 3, **dadurch gekennzeichnet, dass** die diskontinuierliche Phase (12) 60 bis 70 Volumenprozent aufweist.

5. Zweiphasiges, in einem Polymer dispergiertes elektrophoretisches Medium (10) nach einem der vorhergehenden Ansprüche, **dadurch gekennzeichnet, dass** die Tröpfchen eine einzige Teilchenart aufweisen, die in einer gefärbten Suspensionsflüssigkeit angeordnet ist.

6. Zweiphasiges, in einem Polymer dispergiertes elektrophoretisches Medium (10) nach einem der Ansprüche 1 bis 4, **dadurch gekennzeichnet, dass** die Tröpfchen mindestens zwei Teilchenarten aufweisen, die sich in der Ladungspolarität und/oder der elektrophoretischen Beweglichkeit unterscheiden, und die Suspensionsflüssigkeit gefärbt ist.

7. Zweiphasiges, in einem Polymer dispergiertes elektrophoretisches Medium (10) nach einem der Ansprüche 1 bis 4, **dadurch gekennzeichnet, dass** die Tröpfchen mindestens zwei Teilchenarten aufweisen, die sich in der Ladungspolarität und/oder der elektrophoretischen Beweglichkeit unterscheiden, und die Suspensionsflüssigkeit ungefärbt ist.

8. Zweiphasiges, in einem Polymer dispergiertes elektrophoretisches Medium (10) nach Anspruch 7, **dadurch gekennzeichnet, dass** die Suspensionsflüssigkeit aus organischen Lösungsmitteln, halogenierten Lösungsmitteln, halogenierten Polymeren, Silikonölen, linearen Kohlenwasserstoffen, verzweigten Kohlenwasserstoffen und deren Mischungen ausgewählt ist.

9. Zweiphasiges, in einem Polymer dispergiertes elektrophoretisches Medium (10) nach einem der Ansprüche 6 bis 8, **dadurch gekennzeichnet, dass** die Tröpfchen zwei Teilchenarten enthalten, die Titandioxid bzw. Ruß aufweisen.

10. Zweiphasiges, in einem Polymer dispergiertes elektrophoretisches Medium (10) nach einem der vorhergehenden Ansprüche, **dadurch gekennzeichnet, dass** die kontinuierliche Phase (14) Gelatine aufweist.

11. Zweiphasiges, in einem Polymer dispergiertes elektrophoretisches Medium (10) nach Anspruch 10, **dadurch gekennzeichnet, dass** die Gelatine 5 bis 15 Gewichtsprozent des elektrophoretischen Mediums aufweist.

12. Verfahren zum Herstellen eines zweiphasigen, in einem Polymer dispergierten elektrophoretischen Mediums (10), wobei dieses Verfahren aufweist:
Bereitstellen eines flüssigen Mediums, das ein Filmbildungsmaterial aufweist;
Dispergieren im flüssigen Medium mehrerer Tröpfchen, von denen jedes eine Suspensionsflüssigkeit und mindestens ein Teilchen aufweist, das in der Suspensionsflüssigkeit angeordnet und imstande ist, sich beim Anlegen eines elektrischen Felds durch die Flüssigkeit zu bewegen, wodurch ein tröpfchenhaltiges flüssigen Medium gebildet wird; und
Aussetzen des tröpfchenhaltigen flüssigen Mediums Bedingungen, die wirksam sind, zu bewirken, dass das Filmbildungsmaterial darin einen Film bildet, und **dadurch** Erzeugen eines zweiphasigen elektrophoretischen Mediums (10), in dem das Filmbildungsmaterial eine kontinuierliche Phase (14) bildet, die die Tröpfchen umgibt und einkapselt, die die diskontinuierliche Phase (12) des elektrophoretischen Mediums (10) bilden, wobei das Verfahren **dadurch gekennzeichnet ist, dass** die diskontinuierliche Phase (12) mindestens 40 Volumenprozent des zweiphasigen, in einem Polymer dispergierten elektrophoretischen Mediums (10) aufweist.

13. Verfahren nach Anspruch 12 oder 13, **dadurch gekennzeichnet, dass** die Dispersion der mehreren Tröpfchen im flüssigen Medium durch irgendeines oder mehreres beeinflusst wird von: Mischen mit variabler Drehzahl, Ultraschallbehandlung, Scheren und Kolloidmahlen.

14. Verfahren nach Anspruch 12, **dadurch gekennzeichnet, dass** das tröpfchenhaltige flüssige Medium als eine Schicht mit einer Dicke von mindestens 50 µm auf einem Substrat ausgebreitet wird, bevor es den Bedingungen ausgesetzt wird, die eine Filmbildung bewirken.

15. Verfahren nach Anspruch 14, **dadurch gekennzeichnet, dass** das tröpfchenhaltige flüssige Medium als eine Schicht mit einer Dicke von 50 µm bis 200 µm auf einem Substrat ausgebreitet wird, bevor es den Bedingungen ausgesetzt wird, die die Filmbildung bewirken.

16. Verfahren nach Anspruch 15, **dadurch gekennzeichnet, dass** das tröpfchenhaltige flüssige Medium als eine Schicht mit einer Dicke von 100 µm auf einem Substrat ausgebreitet wird, bevor es den Bedingungen ausgesetzt wird, die die Filmbildung bewirken.

17. Verfahren nach einem der Ansprüche 12 bis 16, **dadurch gekennzeichnet, dass** die Bedingungen, die wirksam sind, zu bewirken, dass das Filmbildungsmaterial darin einen Film bildet, irgendeines oder mehreres aufweisen von Strahlungshärten, Erwärmen, Kühlen, Trocknen, Polymerisation, Vernetzen, Sol-Gel-Bildung und Druckhärten.

18. Verfahren nach einem der Ansprüche 12 bis 17, **dadurch gekennzeichnet, dass** die Tröpfchen eine durchschnittliche Ausgangsgröße von 25 Prozent bis 400 Prozent der Dicke des endgültigen Films aufweisen.

## Revendications

1. Milieu électrophorétique biphasique dispersé dans un polymère (10) comprenant une phase continue (14) et une phase discontinue (12), la phase discontinue (12) comprenant une pluralité de gouttelettes, dont chacune comprend un fluide de suspension et au moins une particule disposée à l'intérieur du fluide de suspension et à même de se déplacer à travers le fluide lors de l'application d'un champ électrique au milieu électrophorétique (10), la phase continue (14) entourant et encapsulant la phase discontinue (12), le milieu étant **caractérisé en ce que** la phase discontinue (12) représente au moins 40 pour cent en volume du milieu électrophorétique dispersé dans un polymère (10).

2. Milieu électrophorétique biphasique dispersé dans un polymère (10) selon la revendication 1 **caractérisé en ce que** la phase discontinue (12) représente 40 à 95 pour cent en volume.

3. Milieu électrophorétique biphasique dispersé dans un polymère (10) selon la revendication 2 **caractérisé en ce que** la phase discontinue (12) représente 50 à 80 pour cent en volume.

4. Milieu électrophorétique biphasique dispersé dans un polymère (10) selon la revendication 3 **caractérisé en ce que** la phase discontinue (12) représente 60 à 70 pour cent en volume.

5. Milieu électrophorétique biphasique dispersé dans un polymère (10) selon l'une quelconque des revendications précédentes **caractérisé en ce que** les gouttelettes comprennent un seul type de particule disposée dans un fluide de suspension coloré.

6. Milieu électrophorétique biphasique dispersé dans un polymère (10) selon l'une quelconque des revendications 1 à 4 **caractérisé en ce que** les gouttelettes comprennent au moins deux types de particules qui diffèrent par la polarité des charges et/ou la mobilité électrophorétique, et le fluide de suspension est coloré.

7. Milieu électrophorétique biphasique dispersé dans un polymère (10) selon l'une quelconque des revendications 1 à 4 **caractérisé en ce que** les gouttelettes comprennent au moins deux types de particules qui diffèrent par la polarité des charges et/ou la mobilité électrophorétique, et le fluide de suspension n'est pas coloré.

8. Milieu électrophorétique biphasique dispersé dans un polymère (10) selon la revendication 7 **caractérisé en ce que** le fluide de suspension est choisi parmi les solvants organiques, les solvants halogénés, les polymères halogénés, les huiles de silicone, les hydrocarbures linéaires, les hydrocarbures ramifiés, et les mélanges de ceux-ci.

9. Milieu électrophorétique biphasique dispersé dans un polymère (10) selon l'une quelconque des revendications 6 à 8 **caractérisé en ce que** les gouttelettes contiennent deux types de particules comprenant respectivement de l'oxyde de titane et du noir de carbone.

10. Milieu électrophorétique biphasique dispersé dans un polymère (10) selon l'une quelconque des revendications précédentes **caractérisé en ce que** la phase continue (14) comprend de la gélatine.

11. Milieu électrophorétique biphasique dispersé dans un polymère (10) selon la revendication 10 **caractérisé en ce que** la gélatine représente 5 pour cent à 15 pour cent en poids du milieu électrophorétique.

12. Procédé de préparation d'un milieu électrophorétique biphasique dispersé dans un polymère (10), le procédé comprenant :
l'obtention d'un milieu liquide comprenant un matériau filmogène ;
la dispersion dans le milieu liquide d'une pluralité de gouttelettes, dont chacune comprend un fluide de suspension et au moins une particule disposée à l'intérieur du fluide de suspension et à même de se déplacer à travers le fluide lors de l'application d'un champ électrique, et ainsi la formation d'un milieu liquide contenant des gouttelettes ; et
la soumission du milieu liquide contenant des gouttelettes à des conditions efficaces pour amener le matériau filmogène à l'intérieur de celui-ci à former un film, et ainsi la production d'un milieu électrophorétique biphasique (10) dans lequel le matériau filmogène forme une phase continue (14) entourant et encapsulant les gouttelettes, qui forment la phase discontinue (12) du milieu électrophorétique (10), le procédé étant **caractérisé en ce que** la phase discontinue (12) représente au moins 40 pour cent en volume du milieu électrophorétique dispersé dans un polymère (10).

13. Procédé selon la revendication 12 **caractérisé en ce que** la dispersion de la pluralité de gouttelettes dans le milieu liquide est effectuée par mélange à vitesse variable et/ou sonication et/ou cisaillement et/ou broyage colloïdal.

14. Procédé selon la revendication 12 **caractérisé en ce que**, avant d'être exposé aux conditions pour provoquer la formation d'un film, le milieu liquide contenant des gouttelettes est étalé comme une couche ayant une épaisseur d'au moins 50 µm sur un substrat.

15. Procédé selon la revendication 14 **caractérisé en ce que**, avant d'être exposé aux conditions pour provoquer la formation d'un film, le milieu liquide contenant des gouttelettes est étalé comme une couche ayant une épaisseur de 50 µm à 200 µm sur un substrat.

16. Procédé selon la revendication 15 **caractérisé en ce que**, avant d'être exposé aux conditions pour provoquer la formation d'un film, le milieu liquide contenant des gouttelettes est étalé comme une couche ayant une épaisseur de 100 µm sur un substrat.

17. Procédé selon l'une quelconque des revendications 12 à 16 **caractérisé en ce que** les conditions efficaces pour amener le matériau filmogène à l'intérieur à former un film comprennent un durcissement par irradiation et/ou un chauffage et/ou un refroidissement et/ou un séchage et/ou une polymérisation et/ou une réticulation et/ou une formation par un procédé sol-gel et/ou un durcissement sous pression.

18. Procédé selon l'une quelconque des revendications 12 à 17 **caractérisé en ce que** les gouttelettes ont une taille moyenne initiale de 25 pour cent à 400 pour cent de l'épaisseur du film final.
